# EUROPÄISCHE PATENTSCHRIFT

(11) **EP 1 506 898 B1**
(45) Veröffentlichungstag und Bekanntmachung des Hinweises auf die Patenterteilung: **14.06.2006**
(21) Anmeldenummer: 04090369.2
(22) Anmeldetag: 22.03.1999
(51) Int. Cl.: B60R 21/26

(54) **Airbagvorrichtung für Kraftfahrzeuge**
Airbag device for motor vehicles
Dispositif à coussin gonflable pour véhicules automobiles

(30) Priorität: 24.03.1998 DE 19812915
(43) Veröffentlichungstag der Anmeldung: 16.02.2005
(62) Teilanmeldung aus: 99105787.8
(73) Patentinhaber: TAKATA-PETRI (Ulm) GmbH, 89081 Ulm (DE)
(72) Erfinder: Einsiedel, Heinrich, 89007 Ulm (DE); Heudorfer, Benedikt, 89278 Nersingen (DE); Glöckler, Oliver, 89278 Nersingen (DE); Klaiber, Uwe, 89518 Heidenheim (DE)
(74) Vertreter: Müller, Wolfram Hubertus

(56) Entgegenhaltungen:
- DE-A- 1 956 677
- PATENT ABSTRACTS OF JAPAN Bd. 1997, Nr. 07, 31. Juli 1997 (1997-07-31) -& JP 09 086332 A (TOYO TIRE &RUBBER CO LTD), 31. März 1997 (1997-03-31)
- PATENT ABSTRACTS OF JAPAN Bd. 1995, Nr. 11, 26. Dezember 1995 (1995-12-26) & JP 07 223504 A (TOYOTA MOTOR CORP), 22. August 1995 (1995-08-22)

## Beschreibung

Die Erfindung betrifft eine Airbagvorrichtung für Kraftfahrzeuge, insbesondere eine Seitenairbagvorrichtung nach dem Oberbegriff des Patentanspruchs 1, siehe auch DE-A-1956677.

Derartige Airbagvorrichtungen sind in verschiedenen Ausführungen bekannt (siehe z.B. DE-OS 22 22 621; WO 96/26087; DE 196 13 133 A1; DE 196 13 095 A1). Die Aufgabe des Gasfüllrohrs besteht dabei darin, das vom Gasgenerator bei Zündung erzeugte Druckgas in gewünschter Weise auf die einzelnen Bereiche des sich über eine gewisse Länge erstreckenden Gassackes zu verteilen.

Die Aufgabe der vorliegenden Erfindung besteht darin, eine Airbagvorrichtung der eingangs genannten Gattung zu schaffen, bei der das Gasfüllrohr mit einfachen und rationellen Fertigungstechniken herstellbar ist und gleichwohl auf einfache Weise eine definierte Gaszufuhr zu den einzelnen Bereichen des Gassackes gewährleistet werden kann.

Zur Lösung dieser Aufgabe sind die Merkmale des kennzeichnenden Teiles des Anspruches 1 vorgesehen. Vorteilhafte Weiterbildungen der Erfindung entnimmt man den Unteransprüchen.

Der Erfindungsgedanke ist also darin zu sehen, daß man die Gasaustrittsöffnungen durch einen einfachen Schneid- und Eindrückvorgang herstellt, wobei die Übergangslinie zwischen den Eindrückungen und dem unverformten Rohrmaterial des Gasfüllrohres stetig gekrümmt ist.

Die Erfindung wird im folgenden beispielsweise anhand der Zeichnung beschrieben; in dieser zeigt:
- Figur 1: eine schematische Seitenansicht einer erfindungsgemäßen Seiten-Airbagvorrichtung,
- Figur 2: die Einzelheit II von Figur 1 in vergrößertem Maßstab,
- Figur 3: eine Draufsicht des erfindungsgemäßen Gasfüllrohres im Bereich einer Gasaustrittsöffnung 13 im vergrößerten Maßstab,
- Figur 4: eine perspektivische Ansicht des Endbereiches eines für die erfindungsgemäße Airbagvorrichtung vorgesehenen Gasfüllrohres,
- Figur 5: eine Draufsicht eines Teiles einer weiteren Ausführungsform eines erfindungsgemäßen Gasfüllrohres,
- Figur 6: einen schematischen Schnitt nach Linie VI-VI in Figur 5,
- Figur 7: eine Draufsicht auf einen Teil einer weiteren Ausführungsform eines erfindungsgemäßen Gasfüllrohres mit zwei in Längsrichtung im Abstand parallel zueinander angeordneten Einschnitten,
- Figur 8: eine schematische Schnittansicht nach Linie VIII-VIII in Figur 7,
- Figur 9: eine Seitenansicht des Gegenstandes der Figur 7,
- Figur 10: eine Draufsicht eines Teils einer weiteren Ausführungsform eines erfindungsgemäßen Gasfüllrohres,
- Figur 11: eine schematische Schnittansicht nach Linie XI-XI in Figur 10,
- Figur 12: eine schematische Schnittansicht nach Linie XII-XII in Figur 11,
- Figur 13: eine Draufsicht auf einen Teil einer weiteren Ausführungsform eines erfindungsgemäßen Gasfüllrohres,
- Figur 14: eine schematische Schnittansicht nach Linie XIV-XIV in Figur 13 und
- Figur 15: eine perspektivische Ansicht eines Ausschnittes einer weiteren Ausführungsform eines erfindungsgemäßen Gasfüllrohres.

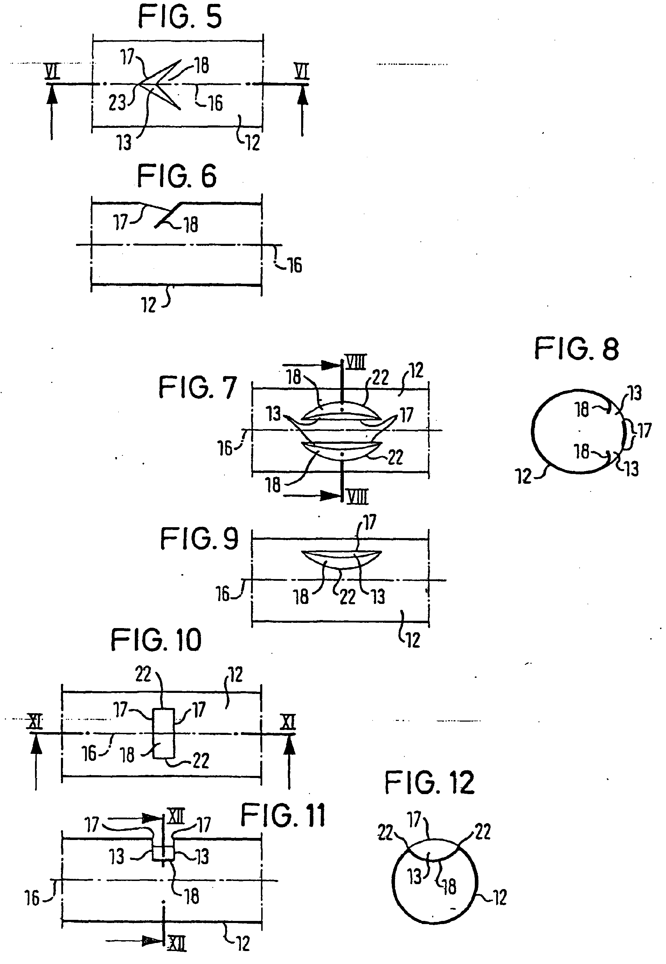

Die Figuren 5, 6 und 10 - 14 beziehen sich nicht auf die Erfindung und dienen lediglich der Erläuterung des Hintergrundes der Erfindung.

Nach der Zeichnung weist das generatorseitige Ende eines Gasfüllrohres 12 einen Flansch 21 auf, mittels dessen es drehgesichert an einem gestrichelt angedeuteten Gasgenerator 11 befestigt ist.

Das Gasfüllrohr 12 ist entlang des Dachholmes eines nicht dargestellten Kraftfahrzeuges verlegt und ist gegebenenfalls erst in einem gewissen Abstand vom Gasgenerator 11 mit einer Reihe hintereinander angeordneter Gasaustrittsöffnungen 13 versehen. Im Bereich der Gasaustrittsöffnungen 13 ist das Gasfüllrohr 12 mit einem nur gestrichelt angedeuteten, aufblähbaren Gassack 14 verbunden, der aus einzelnen Zellen 15 bestehen kann, von denen jede einer Gasaustrittsöffnung 13 zugeordnet ist.

Wie man insbesondere den Figuren 2 bis 4 entnimmt, sind die Gasaustrittsöffnungen 13 durch quer zur Rohrachse 16 verlaufende Einschnitte 17 und Eindrückungen 18 gebildet, die in der Rohrwand auf der vom Generator 11 abgewandten Seite der Einschnitte 17 vorgenommen sind. Auf diese Weise bilden die Eindrückungen 18 Leitflächen für das vom Gasgenerator 11 in das Gasfüllrohr 12 strömende Gas, welches auf diese Weise im Bereich der einzelnen Gasaustrittsöffnungen 13 definiert in die einzelnen Zellen 15 des Gassackes 14 ausgeblasen wird.

Durch entsprechende Länge der Einschnitte 17 und Tiefe der Eindrükkungen 18 kann die an der jeweiligen Gasaustrittsöffnung 13 austretende Gasmenge genau vorbestimmt werden. Insbesondere sollte erfindungsgemäß vorgesehen sein, daß die Eindrückungen in Generatornähe flacher und in den vom Gasgenerator abgewandten Bereichen tiefer sind, damit auch noch im Bereich des Rohrendes ausreichend Gas für das Eintreten in den Gassack 14 zur Verfügung steht.

Am vom Generator 11 abgewandten Ende kann das Gasfüllrohr 12 verschlossen sein, verjüngt sein oder eine Auslaßöffnung haben. Beim gezeigten Ausführungsbeispiel befindet sich jedoch auch am Ende des Gasfüllrohres 12 eine Eindrückung 19, die so bemessen ist, daß auch am vom Generator 11 abgewandten Ende des Gasfüllrohres 12 noch eine Endöffnung 20 genau definierter Größe vorhanden ist, die für das Aufblähen der letzten Zelle 15 des Gassackes dient.

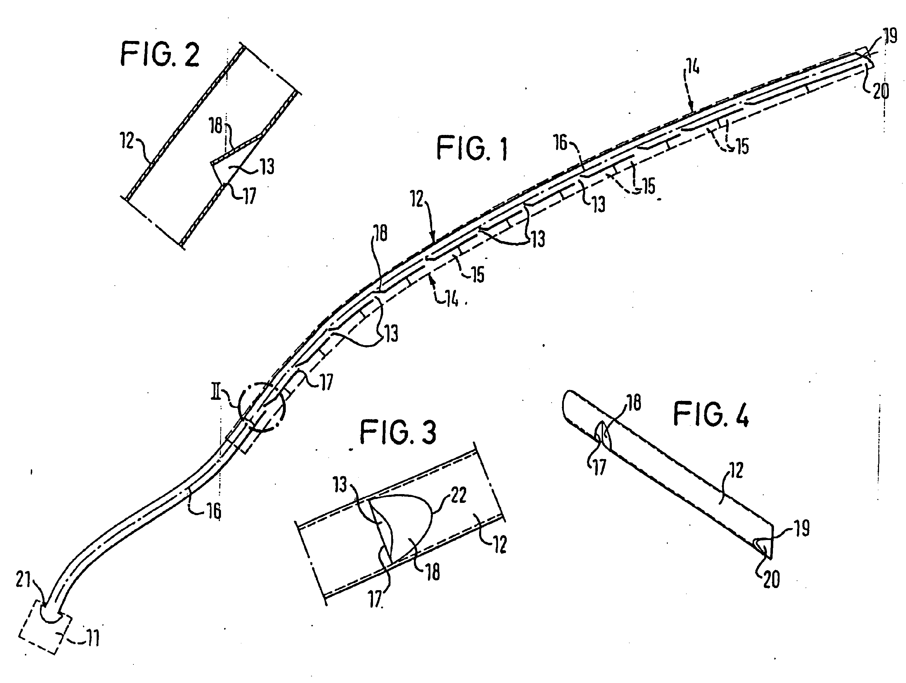

In Figur 3 ist auch die Übergangslinie 22 zwischen der Eindrückung 18 und dem unverformten Teil des Gasfüllrohres 12 eingezeichnet, welche zur Schaffung besonders günstiger Strömungsverhältnisse parabelartig ausgebildet ist.

Bei der Ausführungsform nach Figur 5 ist jede Gasaustrittsöffnung 13 durch einen V-förmigen Einschnitt 17 und eine innerhalb der Schenkel des V vorgenommene Eindrückung 18 gebildet. Die Spitze 23 des V weist dabei zu dem Ende des Gasfüllrohres 12, an dem der Gasgenerator 11 angeordnet ist.

Je nachdem, wie tief die Eindrückung 18 zum Inneren des Gasfüllrohres 12 hin abgebogen ist, kann die aus der Gasaustrittsöffnung 13 austretende Gasmenge genau gesteuert werden.

Beim Ausführungsbeispiel nach den Figuren 7 bis 9 sind im Bereich der Gasaustrittsöffnungen 13 jeweils zwei parallel zur Rohrachse 16 verlaufende Einschnitte 17 in geringem Umfangsabstand voneinander vorgesehen. Das Rohrmaterial zwischen den Einschnitten 17 ist unverformt, während außerhalb der Einschnitte 17 die Eindrückungen 18 vorgenommen sind, um die Gasaustrittsöffnungen 13 definierter Größe zu schaffen. In den Figuren 7 und 9 sind auch wieder die Übergangslinien 22 zwischen den Eindrückungen 18 und dem unverformten Rohrmaterial eingezeichnet, welche einen stetig gekrümmten Verlauf haben.

Bei der Ausführungsform nach den Figuren 10 bis 12 sind pro Gasaustrittsöffnung zwei in Axialrichtung gering beabstandete Einschnitte: 17 parallel zueinander vorgesehen. Zwischen den beiden Einschnitten 17 wird die Eindrückung 18 in der insbesondere aus den Figuren 11 und 12 ersichtlichen Weise eingebracht, wodurch die Gasaustrittsöffnungen 13 definierter Größe gebildet werden. Am Ende der Einschnitte 17 in Umfangsrichtung befinden sich jeweils die Übergangslinien 22 vom verformten zum unverformten Rohrmaterial.

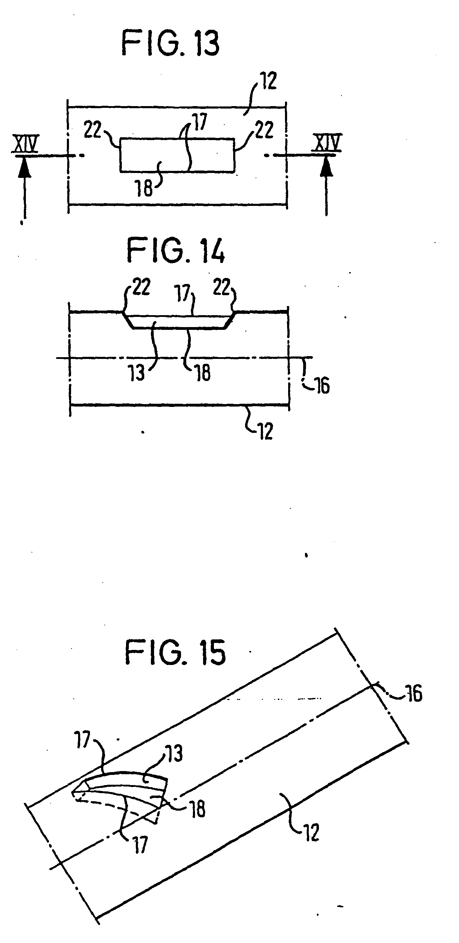

Nach den Figuren 13 und 14 verlaufen jeweils zwei gleich lange und parallel zueinander angeordnete Einschnitte 17 parallel zur Rohrachse 16, ähnlich wie das bei der Ausführungsform nach den Figuren 7 bis 9 der Fall war. Im vorliegenden Ausführungsbeispiel befindet sich jedoch die Eindrückung 18 zwischen den Einschnitten 17, während das Material außerhalb der Einschnitte 17 unverformt ist.

Da die Eindrückungen 18 in Längsrichtung des Gasfüllrohres 12 eine größere Länge als das ursprüngliche Rohrmaterial haben, erfolgt insbesondere im Übergangsbereich zum unverformten Rohrmaterial außer einer reinen Biegung - wie bei den übrigen Ausführungsbeispielen - auch eine bleibende Dehnung des Materials des Gasfüllrohrs 12.

Figur 15 zeigt in perspektivischer Ansicht ein Ausführungsbeispiel, bei dem zwei Einschnitte 17 im geringen Abstand voneinander unter einem Winkel von etwa 45° zur Rohrachse 16 angeordnet sind. Zwischen den beiden Abschnitten 17 befindet sich, ähnlich wie bei der Ausführungsform nach den Figuren 10 bis 12, die Eindrückung 18 zur Bildung der Gasaustrittsöffnungen 13. Aufgrund der Anordnung der Einschnitte 17 außerhalb der Längsrichtung des Gasfüllrohres 12 kann man bei Bildung der Eindrückungen 18 weitgehend ohne Materialdehnungen auskommen.

## Patentansprüche

1. Airbagvorrichtung für Kraftfahrzeuge, insbesondere Seiten-Airbagvorrichtung, mit einem Gasgenerator (11) und einem daran angeschlossenen Gasfüllrohr (12), das in vorbestimmten Abständen mit Gasaustrittsöffnungen (13) versehen und mit einem sich über zumindest einen größeren Teil seiner Länge erstreckenden aufblähbaren Gassack (14) verbunden ist, wobei die Gasaustrittsöffnungen (13) durch Einschnittte (17) in der Wand des Gasfüllrohres (12) und durch Eindrückungen (18) des Rohrwandmaterials zumindest auf einer Seite der Einschnitte (17) gebildet sind, wobei die Eindrückungen (18) sich in Richtung des Innenraumes des Gasfüllrohres erstrecken,
**dadurch gekennzeichnet,**
**daß** die Übergangslinie (22) zwischen den Eindrückungen (18) und dem unverformten Rohrmaterial des Gasfüllrohres (12) stetig gekrümmt ist.

2. Vorrichtung nach Anspruch 1,
**dadurch gekennzeichnet,**
**daß** die Übergangslinie (22) zwischen den Eindrückungen (18) und dem unverformten Rohrmaterial des Gasfüllrohres (12) parabelartig verläuft.

3. Vorrichtung nach Anspruch 1 oder 2,
**dadurch gekennzeichnet**,
die Einschnitte (17) geradlinig sind.

4. Vorrichtung nach einem der vorhergehenden Ansprüche,
**dadurch gekennzeichnet,**
**daß** die Einschnitte (17) zumindest im wesentlichen quer zur Rohrachse (16) verlaufen.

5. Vorrichtung nach einem der vorhergehenden Ansprüche,
**dadurch gekennzeichnet,**
**daß** die Einschnitte (17) zumindest im wesentlichen parallel zur Rohrachse (16) verlaufen.

6. Vorrichtung nach einem der vorhergehenden Ansprüche,
**dadurch gekennzeichnet,**
**daß** die Einschnitte (17) zumindest im wesentlichen unter einem Winkel von 30° bis 60°, insbesondere etwa 45° zur Rohrachse (16) verlaufen.

7. Vorrichtung nach einem der vorhergehenden Ansprüche,
**dadurch gekennzeichnet,**
**daß** die Eindrückungen (18) sich am Einschnitt (17) über dessen Länge erstrecken und sich vom Einschnitt (17) weg verjüngen.

8. Vorrichtung nach einem der vorhergehenden Ansprüche,
**dadurch gekennzeichnet,**
**daß** pro Gasaustrittsöffnung (13) nur ein Einschnitt (17) vorgesehen ist.

9. Vorrichtung nach einem der Ansprüche 1 bis 7,
**dadurch gekennzeichnet,**
**daß** pro Gasaustrittsöffnung (13) im geringen Abstand zwei Einschnitte (17) vorgesehen sind.

10. Vorrichtung nach Anspruch 9,
**dadurch gekennzeichnet,**
**daß** die Eindrückungen (18) außerhalb der Einschnitte (17) vorgesehen sind und das Rohrmaterial zwischen den Einschnitten (17) unverformt ist.

11. Vorrichtung nach einem der vorhergehenden Ansprüche,
**dadurch gekennzeichnet,**
**daß** die Eindrückungen (18) auf der vom Gasgenerator (11) abgewandten Seite der Einschnitte (17) vorgesehen sind.

12. Vorrichtung nach einem der vorhergehenden Ansprüche,
**dadurch gekennzeichnet,**
**daß** das vom Gasgenerator (11) abgewandte Ende des Gasfüllrohres (12) durch eine oder mehrere Eindrückungen (19) entweder ganz oder teilweise verschlossen ist.

13. Vorrichtung nach einem der vorhergehenden Ansprüche,
**dadurch gekennzeichnet,**
**daß** das Gasfüllrohr (12) generatorseitig aufgeweitet oder angestaucht und so am Gehäuse des Generators (11) befestigt ist.

14. Vorrichtung nach einem der vorhergehenden Ansprüche,
**dadurch gekennzeichnet,**
**daß** das generatorseitige Ende des Gasfüllrohres (12) so bearbeitet ist, daß es gegenüber dem Gehäuse des Generators (11) auch eine Verdrehsicherung gewährleistet.

15. Vorrichtung nach einem der vorhergehenden Ansprüche,
**dadurch gekennzeichnet,**
**daß** das Gasfüllrohr entlang des Dachholmes des Kraftfahrzeuges verlegbar ist.

16. Vorrichtung nach Anspruch 15,
**dadurch gekennzeichnet, daß** das Gasfüllrohr (12) durch eine Vielzahl von Biegestellen und geraden Abschnitten der Kontur des Dachholms angepaßt ist.

17. Vorrichtung nach einem der vorhergehenden Ansprüche,
**dadurch gekennzeichnet,**
**dass** der Gassack (15) aus einzelnen Zellen (15) besteht, von denen jede einer Gasaustrittsöffnung (13) zugeordnet ist.

18. Vorrichtung nach einem der vorhergehenden Ansprüche,
**dadurch gekennzeichnet,**
**daß** die Gasaustrittsöffnungen (13) in Form und/oder Größe derart variieren, daß die einzelnen Bereiche des Gassacks (14) bei Zündung des Generators in gewünschter Weise nacheinander oder gleichzeitig aufgebläht werden.

19. Vorrichtung nach einem der vorhergehenden Ansprüche,
**dadurch gekennzeichnet,**
**daß** an beiden Enden des Gasfüllrohres (12) ein Gasgenerator (11) angeschlossen ist.

20. Vorrichtung nach einem der vorhergehenden Ansprüche,
**dadurch gekennzeichnet,**
**daß** das Gasfüllrohr (12) gleichzeitig der Befestigung des Gassackes (14) dient.

21. Vorrichtung nach einem der vorhergehenden Ansprüche,
**dadurch gekennzeichnet,**
**daß** das Gasfüllrohr (12) aus duktilem Metall besteht.

## Claims

1. Airbag device for motor vehicles, in particular side airbag device, having a gas generator (11) and a gas-filling pipe (12) which is connected thereto, is provided with gas outlet openings (13) at predetermined distances and is connected to an inflatable airbag (14) which extends over at least a greater part of its length, the gas outlet openings (13) being formed by incisions (17) in the wall of the gas-filling pipe (12) and by indentations (18) in the pipe wall material at least on one side of the incisions (17), the indentations (18) extending in the direction of the inside of the gas-filling pipe, **characterized in that** the transition line (22) between the indentations (18) and the undeformed pipe material of the gas-filling pipe (12) is continuously curved.

2. Device according to Claim 1, **characterized in that** the transition line (22) between the indentations (18) and the undeformed pipe material of the gas-filling pipe (12) runs parabolically.

3. Device according to Claim 1 or 2, **characterized in that** the incisions (17) are rectilinear.

4. Device according to one of the preceding claims, **characterized in that** the incisions (17) run at least substantially transversely with respect to the pipe axis (16).

5. Device according to one of the preceding claims, **characterized in that** incisions (17) run at least substantially parallel to the pipe axis (16).

6. Device according to one of the preceding claims, **characterized in that** the incisions (17) run at least substantially at an angle of 30° to 60°, in particular approximately 45°, with respect to the pipe axis (16).

7. Device according to one of the preceding claims, **characterized in that** the indentations (18) extend at the incision (17) over the length thereof and taper away from the incision (17).

8. Device according to one of the preceding claims, **characterized in that** only one incision (17) is provided per gas outlet opening (13).

9. Device according to one of Claims 1 to 7, **characterized in that** two incisions (17) are provided at a short distance apart per gas outlet opening (13).

10. Device according to Claim 9, **characterized in that** the indentations (18) are provided outside the incisions (17) and the pipe material between the incisions (17) is undeformed.

11. Device according to one of the preceding claims, **characterized in that** the indentations (18) are provided on that side of the incisions (17) which faces away from the gas generator (11).

12. Device according to one of the preceding claims, **characterized in that that** end of the gas-filling pipe (12) which faces away from the gas generator (11) is either entirely or partially closed by one or more indentations (19).

13. Device according to one of the preceding claims, **characterized in that** the gas-filling pipe (12) is expanded or upset on the generator side and is thereby fastened to the housing of the generator (11).

14. Device according to one of the preceding claims, **characterized in that that** end of the gas-filling pipe (12) which is on the generator side is machined in such a manner that it also ensures antitwist protection with respect to the housing of the generator (11).

15. Device according to one of the preceding claims, **characterized in that** the gas-filling pipe can be laid along the roof strut of the motor vehicle.

16. Device according to Claim 15, **characterized in that** the gas-filling pipe (12) is matched to the contour of the roof strut by means of a multiplicity of bending points and rectilinear sections.

17. Device according to one of the preceding claims, **characterized in that** the airbag (14) is composed of individual cells (15), each of which is assigned to a gas outlet opening (13).

18. Device according to one of the preceding claims, **characterized in that** the gas outlet openings (13) vary in shape and/or size in such a manner that, when the generator is ignited, the individual regions of the airbag (14) are inflated successively or simultaneously in the desired manner.

19. Device according to one of the preceding claims, **characterized in that** a gas generator (11) is connected to both ends of the gas-filling pipe (12).

20. Device according to one of the preceding claims, **characterized in that** the gas-filling pipe (12) is used at the same time for fastening the airbag (14).

21. Device according to one of the preceding claims, **characterized in that** the gas-filling pipe (12) consists of ductile metal.

## Revendications

1. Dispositif à coussin gonflable pour véhicules automobiles, en particulier dispositif à coussin gonflable latéral, avec un générateur de gaz (11) et un tube de remplissage de gaz (12) raccordé à celui-ci qui est doté à des intervalles prédéterminés d'orifices de sortie de gaz (13) et d'un sac de gaz (14) gonflable s'étendant sur au moins une partie majeure de sa longueur, les orifices de sortie de gaz (13) étant formés par des entailles (17) dans la paroi du tube de remplissage de gaz (12) et par des enfoncements (18) du matériau de la paroi du tube au moins sur un côté des entailles (17), les enfoncements (18) s'étendant en direction de l'intérieur du tube de remplissage de gaz,
**caractérisé en ce que** la ligne de transition (22) entre les enfoncements (18) et le matériau du tube non déformé du tube de remplissage de gaz (12) est courbée en continu.

2. Dispositif selon la revendication 1, **caractérisé en ce que** la ligne de transition (22) entre les enfoncements (18) et le matériau du tube non déformé du tube de remplissage de gaz (12) présente une forme de parabole.

3. Dispositif selon la revendication 1 ou 2, **caractérisé en ce que** les entailles (17) sont rectilignes.

4. Dispositif selon l'une quelconque des revendications précédentes, **caractérisé en ce que** les entailles (17) sont au moins essentiellement perpendiculaires à l'axe du tube (16).

5. Dispositif selon l'une quelconque des revendications précédentes, **caractérisé en ce que** les entailles (17) sont au moins essentiellement parallèles à l'axe du tube (16).

6. Dispositif selon l'une quelconque des revendications précédentes, **caractérisé en ce que** les entailles (17) sont au moins essentiellement à un angle de 30° à 60°, en particulier 45°, par rapport à l'axe du tube (16).

7. Dispositif selon l'une quelconque des revendications précédentes, **caractérisé en ce que** les enfoncements (18) s'étendent sur l'entaille (17) sur la longueur de celle-ci et rétrécissent en s'éloignant de l'entaille (17).

8. Dispositif selon l'une quelconque des revendications précédentes, **caractérisé en ce que** seulement une entaille (17) est prévue par orifice de sortie de gaz (13).

9. Dispositif selon l'une des revendications 1 à 7, **caractérisé en ce que** deux entailles (17) faiblement espacées sont prévues par orifice de sortie de gaz (13).

10. Dispositif selon la revendication 9, **caractérisé en ce que** les enfoncements (18) sont prévus en dehors des entailles (17) et **en ce que** le matériau du tube est non déformé entre les entailles (17).

11. Dispositif selon l'une quelconque des revendications précédentes, **caractérisé en ce que** les enfoncements (18) sont prévus sur le côté des entailles (17) opposé au générateur de gaz (11).

12. Dispositif selon l'une quelconque des revendications précédentes, **caractérisé en ce que** l'extrémité du tube de remplissage de gaz (12) opposée au générateur de gaz (11) est totalement ou partiellement fermée par un ou plusieurs enfoncement(s) (19).

13. Dispositif selon l'une quelconque des revendications précédentes, **caractérisé en ce que** le tube de remplissage de gaz (12) est élargi ou refoulé côté générateur et est ainsi fixé au boîtier du générateur (11).

14. Dispositif selon l'une quelconque des revendications précédentes, **caractérisé en ce que** l'extrémité du tube de remplissage de gaz (12) côté générateur est façonnée de telle sorte qu'elle garantit également une sécurité anti-torsion par rapport au boîtier du générateur (11).

15. Dispositif selon l'une quelconque des revendications précédentes, **caractérisé en ce que** le tube de remplissage de gaz peut être déplacé le long du longeron de pavillon du véhicule.

16. Dispositif selon la revendication 15, **caractérisé en ce que** le tube de remplissage de gaz (12) est adapté au contour du longeron de pavillon par une multitude de points de pliage et de sections droites.

17. Dispositif selon l'une quelconque des revendications précédentes, **caractérisé en ce que** le sac de gaz (14) est constitué de cellules (15) uniques à chacune desquelles est affecté un orifice de sortie de gaz (13).

18. Dispositif selon l'une quelconque des revendications précédentes, **caractérisé en ce que** les orifices de sortie de gaz (13) varient de telle façon dans leur forme et/ou leur taille que les différentes zones du sac de gaz (14) sont gonflées au choix successivement ou simultanément lors de l'allumage du générateur.

19. Dispositif selon l'une quelconque des revendications précédentes, **caractérisé en ce qu'**un générateur de gaz (11) est raccordé aux deux extrémités du tube de remplissage de gaz (12).

20. Dispositif selon l'une quelconque des revendications précédentes, **caractérisé en ce que** le tube de remplissage de gaz (12) sert en même temps à la fixation du sac de gaz (14).

21. Dispositif selon l'une quelconque des revendications précédentes, **caractérisé en ce que** le tube de remplissage de gaz (12) est en métal ductile.
